# FASCICULE DE BREVET EUROPEEN

(11) **EP 1 507 374 B1**
(45) Date de publication et mention de la délivrance du brevet: **19.03.2008**
(21) Numéro de dépôt: 04292011.6
(22) Date de dépôt: 06.08.2004
(51) Int. Cl.: H04L 12/56

(54) **Procédé et dispositif de gestion de priorité lors de la transmission d'un message.**
Verfahren und Vorrichtung zur Prioritätsverwaltung während der Übertragung einer Nachricht.
Method and device for priority management during a message transmission.

(30) Priorité: 13.08.2003 FR 0309918
(43) Date de publication de la demande: 16.02.2005
(73) Titulaire: Arteris, 75008 Paris (FR)
(72) Inventeur: Douady, César, Orsay 91400 (FR); Boucard, Philippe, 78150 Le Chesnay (FR)
(74) Mandataire: Casalonga, Axel

(56) Documents cités:
- US-A1- 2002 196 785
- YAMAGUCHI Y ET AL: "CODA-R: a reconfigurable testbed for real-time parallel computation" REAL-TIME COMPUTING SYSTEMS AND APPLICATIONS, 1997. PROCEEDINGS., FOURTH INTERNATIONAL WORKSHOP ON TAIPEI, TAIWAN 27-29 OCT. 1997, LOS ALAMITOS, CA, USA,IEEE COMPUT. SOC, US, 27 octobre 1997 (1997-10-27), pages 252-259, XP010251835 ISBN: 0-8186-8073-3
- TODA K ET AL: "A priority forwarding scheme for real-time multistage interconnection networks" PROCEEDINGS OF THE REAL TIME SYSTEMS SYMPOSIUM. PHOENIX, DEC. 2 - 4, 1992, LOS ALAMITOS, IEEE COMP. SOC. PRESS, US, 2 décembre 1992 (1992-12-02), pages 208-217, XP010031283 ISBN: 0-8186-3195-3
- TODA K ET AL: "Implementation of a priority forwarding router chip for real-time interconnection networks" PARALLEL AND DISTRIBUTED REAL-TIME SYSTEMS, 1994. PROCEEDINGS OF THE SECOND WORKSHOP ON CANCUN, MEXICO 28-29 APRIL 1994, LOS ALAMITOS, CA, USA,IEEE COMPUT. SOC, 28 avril 1994 (1994-04-28), pages 166-175, XP010125212 ISBN: 0-8186-6420-7

## Description

La présente invention concerne un procédé et un dispositif de gestion de priorité lors de la transmission d'un message dans un réseau d'interconnexions.

Les réseaux d'interconnexions assurent une transmission de messages entre différents agents ou entités d'un réseau de communication. Une transmission peut être faite sans effectuer de traitement du message, ou bien en effectuant un traitement du message. On parle dans tous les cas de transmission de messages. On entend par traitement d'un message, par exemple une analyse de données contenues dans le message, ou bien un ajout de données au message.

Un message est, bien entendu, une suite de données informatiques, c'est-à-dire une suite de bits ou d'octets. Chaque message comprend un en-tête de message qui comprend principalement l'adresse de destination du message et la taille du message.

Ces réseaux d'interconnexions sont généralement composés de deux parties distinctes qui interagissent, à savoir une partie matérielle comprenant des liens physiques et un contrôleur de réseaux, câblé ou micro programmé, qui exécute un protocole de bas niveau, et une partie logicielle pour effectuer l'interface avec des fonctions logicielles de plus haut niveau.

Un réseau d'interconnexions idéal serait certainement un réseau totalement interconnecté, c'est-à-dire un réseau dans lequel chaque paire d'agents est connectée par une liaison point-à-point. Cela est cependant irréaliste dès que l'on dépasse quelques dizaines d'agents. Il est donc nécessaire que le réseau d'interconnexions puisse assurer l'ensemble des communications entre agents avec un nombre limité de liens par agent.

Il existe des agents spécialisés pour effectuer un routage ou aiguillage ou transmission des messages circulant sur le réseau d'interconnexions.

Ces réseaux d'interconnexions comprennent des dispositifs de transmission ou routeurs ("switch" en langue anglaise), une organisation du réseau assurant le lien entre les routeurs et les autres agents, et un ensemble de routage qui assure la circulation des messages au sein de l'organisation du réseau.

Un routeur est un agent actif du réseau d'interconnexions qui reçoit en entrée des messages venant d'un ou plusieurs agents et qui achemine ou route chacun de ces messages respectivement vers leur agent de destination ou vers un autre routeur. Ce routage est effectué au moyen de l'adresse de l'agent destinataire du message, qui est présente dans l'en-tête du message à router.

L'organisation d'un réseau constitue la structure physique reliant les différents noeuds ou points de connexions d'un réseau d'interconnexions.

L'ensemble de routage gère la manière dont est routé, ou acheminé, un message depuis un agent source émettant le message vers un agent destinataire du message à travers des routeurs en empruntant un chemin de routage.

Tout agent présent dans un réseau d'interconnexions peut émettre et/ou recevoir des messages. La technique de routage détermine la manière dont les messages sont transmis depuis l'agent émetteur, qui crée le message, vers l'agent destinataire. Pour un réseau d'interconnexions donné, il existe différentes techniques de routage, pour lesquelles les principaux objectifs sont de réduire la latence de fin de message, ou délai d'acheminement de fin de message, d'un message, depuis l'agent émetteur jusqu'à l'agent destinataire, d'augmenter le débit global, et d'améliorer la fiabilité globale du réseau. La latence inclut tous les temps d'attente dus à la manière dont se propagent les messages dans le réseau et plus particulièrement à travers les dispositifs de transmission de messages ayant la charge de router les messages. Le débit est la quantité de données informatiques qu'un lien du réseau peut transporter par unité de temps, et peut être mesuré localement sur un lien du réseau d'interconnexions ou globalement sur l'ensemble du réseau d'interconnexions. La fiabilité d'un réseau est importante, car la probabilité d'erreurs croit rapidement avec le nombre de noeuds dans un réseau d'interconnexions.

Un agent de transmission comprend au moins une entrée comprenant un moyen de mémorisation organisé en file de messages de type premier entré premier sorti ou FIFO ("First In First Out" en langue anglaise) et au moins une sortie comprenant un moyen de transmission de message apte à décider du message à transmettre. Seul les premiers messages des files des entrées sont bien entendu visibles pour l'agent de transmission.
Des procédés de routage tenant compte de priorités entre les messages existent. Le document présent sur le site brocade.com de la société Brocade, intitulé "Providing reliable, high speed operations in large SANs" et le document présent sur le site cva.stanford.edu intitulé "Virtual Channel, Flit Reservation Flow Control and Deadlock" relatent une méthode consistant à affecter des priorités aux messages lors de leur création, et à ordonner les messages d'une file de message d'une entrée d'un agent de transmission selon leur priorité.

Cette modification de l'ordre des messages a un coût matériel et logiciel élevé. De plus, certaines applications ne supportent pas que des messages n'arrivent pas dans l'ordre dans lequel ils ont été créés, comme certaines applications en temps réel, par exemple des applications d'affichage ou de retransmission audio ou vidéo.

Au vu de ce qui précède, l'invention a notamment pour but d'effectuer un routage, qui tienne compte des priorités des messages, à moindre coût, et qui améliore sensiblement la gestion du débit dans le réseau.

Le document « CODA-R : a reconfigurable testbed for real-time parallel computation » de YAMAGUCHI Y., REAL-TIME COMPUTING SYSTEMS AND APPLICATIONS, 1997, PROCEEDINGS, FOURTH INTERNATIONAL WORKSHOP ON TAIPEI, TAIWAN 27-29 Oct 1997, LOS ALAMITOS, CA, USA, IEEE COMPUT. SOC, US, 27 Oct. 1997 (1997-10-27), pages 252-269, XP010251835 ISBN: 0-8186-5073-3, porte sur l'utilisation d'une priorité de file, en prenant une priorité de port d'entrée égale au maximum des priorités des paquets de données présents dans la mémoire tampon associée au port. Cette mémoire tampon est organisée en file d'attente. La priorité de port est mise à jour si un paquet de plus haute priorité est transmis à ce port par un élément de routage précédent, lorsque l'élément de routage est dans une situation de blocage, un tel blocage n'est pas évité.

Ainsi, selon un aspect de l'invention, il est proposé un procédé de gestion de priorité lors de la transmission d'un message, dans un réseau d'interconnexions comprenant au moins un agent de transmission qui comprend au moins une entrée et au moins une sortie, chaque entrée comprenant un moyen de mémorisation d'une file de messages. On affecte une priorité de message lors de la création du message, et on affecte à au moins une file de messages d'une entrée une priorité de file égale au maximum des priorités des messages de la file.

On peut ainsi tenir compte de la priorité élevée d'un message, en affectant virtuellement, aux messages qui le précèdent dans sa file de messages, la priorité dudit message qui est plus élevée que celles desdits messages qui le précèdent. On peut donc gérer des priorités à faible coût, et sans avoir à modifier l'ordre des messages de la file, car certaines applications ne supportent pas de recevoir des messages dans un ordre modifié.

Dans un mode de mise en oeuvre préféré, on transmet, en outre, sur une sortie de l'agent de transmission, le message, destiné à ladite sortie, d'une file ayant la priorité de file la plus élevée.

Dans un mode de mise en oeuvre avantageux, on affecte une priorité de lien à un lien reliant une sortie d'un premier agent de transmission à une entrée d'un second agent de transmission, égale au maximum des priorités des files de messages des entrées dudit premier agent comprenant un premier message destiné à la sortie dudit premier agent connectée audit lien. De plus, on transmet la priorité du lien à l'entrée dudit second agent connectée au lien.

Dans un mode de mise en oeuvre préféré, on affecte, en outre, à la file des messages de l'entrée dudit second agent sur laquelle arrive ledit lien, une priorité résultante égale au maximum de la priorité du lien et de la priorité de la file de messages de l'entrée sur laquelle est connecté le lien.

En outre, on affecte une priorité de lien à un lien connecté à une sortie du second agent de transmission, étant une priorité résultante égale au maximum de priorités résultantes qui résultent des priorités de files de messages et des priorités des liens respectifs desdites files de messages des entrées dudit second agent comprenant un premier message destiné à ladite sortie dudit second agent.

En d'autres termes, on affecte une priorité de lien à un lien reliant une sortie d'un premier agent de transmission, qui est égale au maximum des priorités résultantes des files de messages des entrées dudit premier agent comprenant un premier message destiné à ladite sortie du premier agent connectée audit lien. La priorité résultante d'une file d'une entrée d'un agent étant définie comme le maximum des priorités des messages constituant la file et de la priorité du lien connecté à ladite file de messages.

Dans un mode de mise en oeuvre avantageux, on transmet, en outre, sur une sortie du premier agent de transmission, le message, destiné à ladite sortie, d'une file ayant la priorité résultante la plus élevée.

Dans un mode de mise en oeuvre préféré, on gère dynamiquement la priorité affectée à un message crée par un agent en fonction du débit de réponse aux messages émis par ledit agent, pour optimiser l'utilisation du débit de communication disponible.

Selon l'invention, il est également proposé un système de gestion de priorité lors de la transmission d'un message dans un réseau d'interconnexions comprenant au moins un agent de transmission qui comprend au moins une entrée et au moins une sortie, chaque entrée comprenant un moyen de mémorisation organisé en une file de messages. Les agents du système créateurs de messages comprennent des moyens pour affecter une priorité de message transmise avec le message. En outre, au moins une file de messages d'une entrée comprend des moyens pour affecter à la file de messages une priorité de file égale au maximum des priorités des messages de la file.

Dans un mode de réalisation préféré, une sortie dudit agent de transmission comprend des moyens pour transmettre le message, destiné à ladite sortie, d'une file ayant la priorité de file la plus élevée.

Dans un mode de réalisation avantageux, le système comprend des moyens pour affecter une priorité de lien à un lien reliant une sortie d'un premier agent de transmission à une entrée d'un second agent de transmission, égale au maximum des priorités des files de messages des entrées dudit premier agent comprenant un premier message destiné à la sortie dudit premier agent connectée audit lien. Le système comprend en outre des moyens de transmission de la priorité du lien à l'entrée dudit second agent connectée au lien.

En outre, le système comprend des moyens pour affecter une priorité de lien à un lien connecté à une sortie du second agent, étant une priorité résultante, égale au maximum de priorités résultantes qui résultent des priorités de files de messages et des priorités des liens respectifs desdites files de messages des entrées dudit second agent comprenant un premier message destiné à ladite sortie dudit second agent.

Dans un mode de réalisation préféré, une sortie dudit agent comprend des moyens pour transmettre le message, destiné à ladite sortie, d'une file ayant la priorité résultante la plus élevée.

Dans un mode de réalisation avantageux, le système comprend des moyens pour affecter à la file des messages de l'entrée dudit second agent sur laquelle arrive ledit lien, une priorité résultante égale au maximum de la priorité du lien et de la priorité de la file de messages de l'entrée sur laquelle est connecté le lien.

Dans un mode de réalisation préféré, le système comprend des moyens pour transmettre une priorité de lien étant une priorité résultante.

Dans un premier exemple, les moyens de transmission comprennent des liaisons point-à-point associées chacune à un lien de transmission de messages.

Dans un second exemple, lesdits moyens de transmission sont aptes à transmettre une desdites priorités dans un message dédié.

D'autres buts, caractéristiques et avantages de l'invention apparaîtront à la lecture de la description suivante, donnée à titre d'exemple non limitatif, et faite en référence aux dessins annexés sur lesquels :
- la figure 1 est un schéma synoptique d'un premier mode de réalisation d'un système selon l'invention; et
- la figure 2 est un schéma synoptique d'un second mode de réalisation d'un système selon l'invention.
- la figure 3 illustre les étapes d'un procédé selon l'invention mis en oeuvre par un dispositif selon la figure 2.

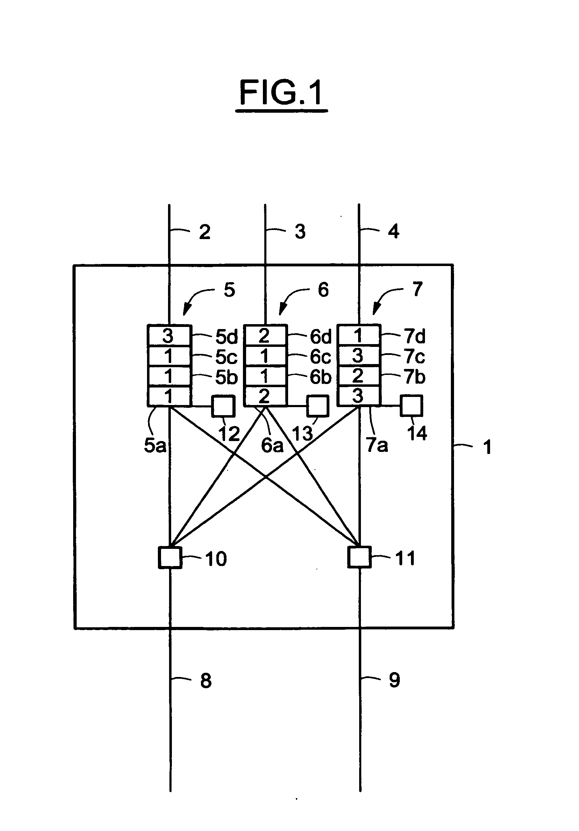

Sur la figure 1, un agent de transmission de messages 1 comprend trois entrées 2, 3, 4 ayant respectivement chacune un module de mémorisation organisé en file de messages 5,6,7. Le nombre d'entrées de l'agent de transmission 1 peut évidemment être quelconque. L'agent de transmission 1 peut soit transmettre un message tel quel, soit effectuer un traitement entre leur réception et leur émission.

L'agent de transmission 1 comprend deux sorties 8, 9, chacune comprenant respectivement un module de transmission 10, 11 apte à choisir le message à transmettre sur la sortie respective 8, 9. Le nombre de sorties de l'agent 1 peut, bien entendu, être différent. Les sorties 8, 9 de l'agent de transmission 1 sont reliées à l'ensemble des files de messages 5, 6, 7. Un module de transmission 10, 11 a accès au premier message d'une file de messages 5, 6, 7. Les files de messages 5, 6, 7 comprennent respectivement des modules 12, 13, 14 pour affecter à leur file de messages 5, 6, 7 respective, une priorité de file égale au maximum des priorités des messages de ladite file 5, 6, 7. Cela peut, par exemple, être effectué en utilisant un ensemble de compteurs, chacun dédié à un niveau de priorité de message et à une file de messages 5, 6, 7, indiquant chacun, à tout instant, le nombre de messages du niveau de priorité correspondant présents dans la file 5, 6, 7.

On va maintenant décrire un exemple de fonctionnement d'un tel dispositif en référence à la figure 1. A cet effet, on a ici représenté, par exemple des files de messages 5, 6, 7 comprenant chacune 4 messages, avec trois niveaux de priorité, de valeurs 1, 2 et 3. Ces priorités ont été affectées aux messages lors de leur création. La file de messages 5 est à cet instant composée d'un premier message 5a de priorité 1, d'un deuxième message 5b de priorité 1, d'un troisième message 5c de priorité 1, et d'un quatrième message 5d de priorité 3. La file de messages 6 est, quant à elle, composée d'un premier message 6a de priorité 2, d'un deuxième message 6b de priorité 1, d'un troisième message 6c de priorité 1, et d'un quatrième message 6d de priorité 2. Enfin, la file de messages 7 est composée d'un premier message 7a de priorité 3, d'un deuxième message 7b de priorité 2, d'un troisième message 7c de priorité 3, et d'un quatrième message 7d de priorité 1.

Le module 12 affecte une priorité de file à la file de messages 5. Cette priorité est égale au maximum des priorités des messages de la file, en l'occurrence 3, qui est la valeur de la priorité du message 5d. De même, le module 13 affecte, à la file de messages 6, une priorité de file de valeur 2, qui est la valeur des messages 6a et 6d. Le module 14 affecte, à la file de messages 7, une priorité de file de valeur 3, qui est la valeur des messages 7a et 7c.

On va expliciter un exemple où le premier message 5a de la file 5 est destiné à la sortie 8, le premier message 6a de la file 6 est destiné à la sortie 8, et le premier message 7a de la file 7 est destiné à la sortie 9.

Le module de transmission 10 de la sortie 8, compare les priorités de file des files de messages dont le premier message est destiné à la sortie 8. En l'occurrence, dans cet exemple, il ne compare que les priorités de file des files 5 et 6. La priorité de la file 5 ayant une valeur égale à 3, et la priorité de la file 6 ayant une valeur égale à 2, le module de transmission 10 va transmettre le premier message 5a de la file 5 sur la sortie 8.

Pour les sorties d'agents de transmission, la sélection du message à transférer en priorité sera effectuée de la manière qui vient d'être décrite.

Si plusieurs files destinées à une même sortie d'un agent de transmission ont une même priorité de file, alors le choix de la file dont le premier message sera transmis se fera par des procédés connus, par exemple au hasard.

Ce procédé permet donc, lorsqu'un message de haute priorité arrive sur une file de messages d'une entrée d'un agent de transmission, de simuler une affectation temporaire de sa priorité aux messages de la file qui le précèdent, et en quelque sorte de pousser les messages devant pour forcer le passage de ce message à haute priorité.

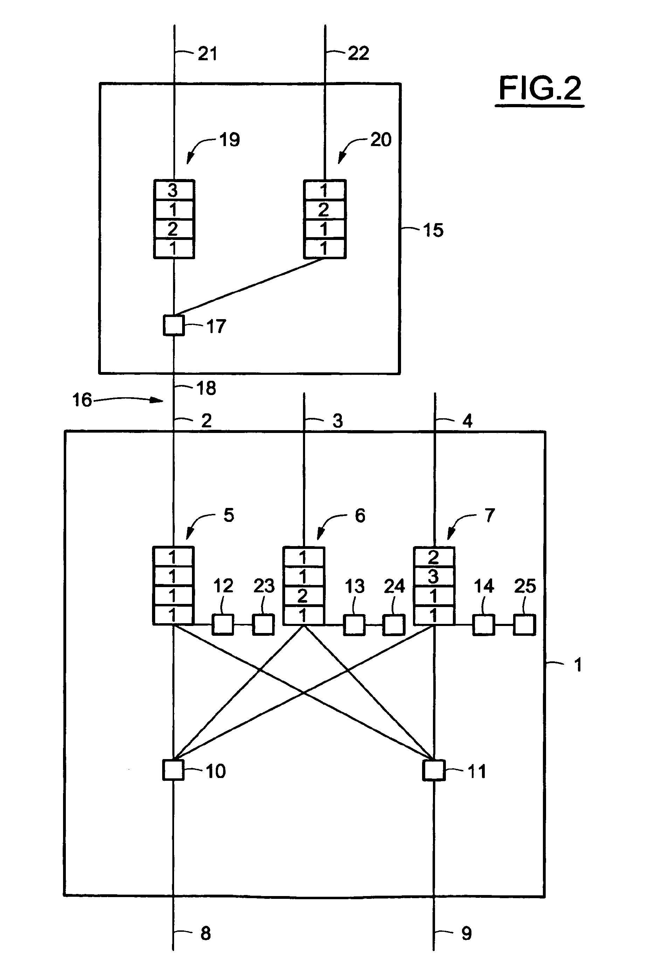

La figure 2 est un schéma synoptique d'un second mode de réalisation d'un système selon l'invention, avec un niveau de priorité supplémentaire. Sur l'exemple décrit, les références communes avec celles de la figure 1 gardent une numérotation identique. On tient compte en outre d'un agent de transmission 15, relié à une entrée de l'agent de transmission 1, ici l'entrée 2, par un lien 16. Un module de transmission 17 d'une sortie 18, affecte une priorité de lien au lien 16, égale au maximum des priorités des files de messages 19, 20 des entrées 21, 22 de l'agent 15 qui comprennent un premier message destiné à la sortie 18 connectée audit lien 16. Le module 17 transmet la priorité de lien à la file de messages 5 de l'entrée 2. Les modules 12, 13, 14 affectent une priorité de file à leur file respective 5, 6, 7. Des modules 23, 24, 25 affectent respectivement une priorité résultante à leur file 5, 6, 7.

Dans l'exemple illustré par la figure 2, le module 17 affecte une priorité de lien égale à 3 au lien 16. Cette priorité de lien a pour valeur 3, car la priorité de file de la file 19 vaut 3, la priorité de file de la file 20 vaut 2, et ici, le premier message de la file 19 et le premier message de la file 20 sont destinés à la sortie 18. La priorité de lien du lien 16 valant le maximum de ces deux valeurs, elle vaut 3.

Les modules 12, 13, et 14 calculent respectivement des priorités de files valant 1, 2, et 3 pour les files 5, 6 et 7. Les modules 23, 24, et 25 affectent respectivement des priorités résultantes aux files 5, 6, et 7. Dans cet exemple, les priorités résultantes des files 6 et 7 sont leurs priorités de file, à savoir respectivement 2 et 3, et seuls le premier message de la file 5 et le premier message de la file 6 sont destinés à la sortie 8. Le module 23 va tenir compte de la priorité de lien du lien 16, qui vaut 3, en affectant une priorité résultante valant 3, égale au maximum de la priorité de file de la file 5, qui vaut 1, et de la priorité du lien 16, qui vaut 3. Le module de transmission 10 affecte alors la priorité maximale, parmi les priorités résultantes des files de messages 5 et 6, le premier message de la file 7 n'étant pas destiné à la sortie 8 associée au module 10, et transmet le message correspondant sur la sortie 8. Cette priorité maximale, valant 3, tient donc compte des messages présents dans des files de messages d'agents situés en amont. Le module de transmission 10 de la sortie 8 affecte au lien connecté à la sortie 8, égale au maximum des priorités résultantes des files de messages 5, 6 des entrées 2, 3 de l'agent 1 qui comprennent un premier message destiné à la sortie 8.

Bien entendu, tout ce qui est décrit dans cet exemple s'applique à un nombre quelconque d'agents.

En d'autres termes on propage une priorité entre un agent initiateur d'un message et un agent destinataire du message, afin de pousser les messages qui précèdent un message ayant une priorité plus élevée.

De même que précédemment, si pour une sortie, plusieurs files, dont le premier message est destiné à la sortie, ont une même valeur de priorité résultante, alors on utilise un procédé connu pour les départager, par exemple au hasard.

La transmission des différentes priorités utilisées dans les mises en application décrites précédemment peut être effectuée, par exemple, au moyen de connections point-à-point supplémentaires, dédiées à la transmission de ces priorités, ou en incluant ces priorités dans des messages spécifiques dédiés.

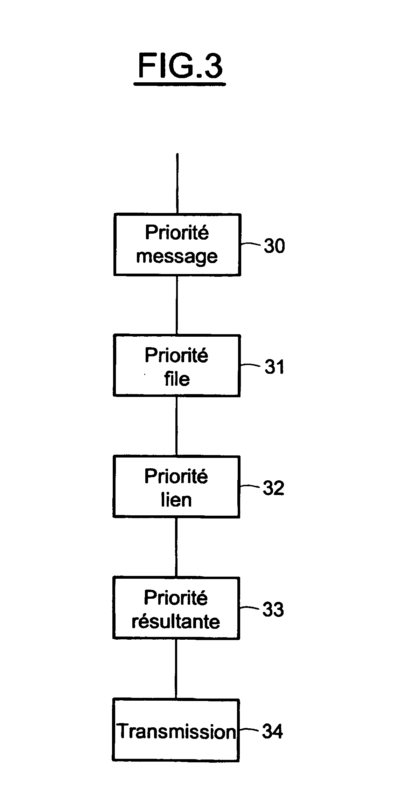

La figure 3 décrit les étapes d'un procédé selon l'invention, mis en oeuvre par un dispositif selon la figure 2.

Tout d'abord, lors de la création d'un message par un agent du réseau d'interconnexions, on affecte à ce message une priorité (étape 30). Dans les exemples cités, on prend trois niveaux de priorité, 1, 2 et 3. Bien entendu, tout reste valable quel que soit le nombre de niveaux de priorités, celui-ci étant généralement inférieur ou égal à 8.

Pour un agent 1 de transmission appartenant au réseau d'interconnexions, pour les files de messages 5, 6, 7 des entrées de l'agent 1, on calcule une priorité de file égale au maximum des priorités des messages de la file de chaque entrée (étape 31).

Pour une entrée 2 de l'agent 1, relié à une sortie 18 d'un agent amont 15, on affecte une priorité de lien, égale au maximum des priorités de file des files de messages 19, 20, dont le premier message de file est destiné à ladite sortie 18 (étape 32). S'il faut tenir compte d'une priorité de lien d'un agent amont de l'agent 15, on le fera comme cela est décrit ci-après dans le cas de l'agent 1.

On détermine une priorité résultante pour une file de message 5, 6, 7 d'une entrée 2, 3, 4, égale au maximum de la priorité de file de la file en question et de la priorité de lien du lien connecté à l'entrée (étape 33).

Enfin, on transmet, pour une sortie, le premier message de file, destiné à ladite sortie, dont la file a la priorité résultante égale au maximum des priorités résultantes (étape 34). Si plusieurs files ont une même valeur de priorité résultante maximale, on choisira une file parmi ces files au moyen d'un procédé connu, par exemple au hasard.

L'invention permet de tenir compte à faible coût de la priorité d'un message dans un circuit d'interconnexions, en propageant les priorités à travers les agents présents dans le réseau d'interconnexions.

L'invention permet en outre d'optimiser l'utilisation du débit global d'un réseau d'interconnexions.

## Revendications

1. Procédé de gestion de priorité lors de la transmission d'un message, dans un réseau d'interconnexions comprenant au moins un agent de transmission (1) qui comprend au moins une entrée (2,3,4) et au moins une sortie (8,9), chaque entrée (2,3,4) comprenant un moyen de mémorisation (5,6,7) d'une file de messages de type premier entré premier sorti, dans lequel :
- on affecte une priorité de message lors de la création du message ;
- on affecte à au moins une file de messages d'une entrée une priorité de file égale au maximum des priorités des messages de la file;
**caractérisé en ce que:**
- on affecte une priorité de lien à un lien (16) reliant une sortie (18) d'un premier agent de transmission (15) à une entrée (2) d'un second agent de transmission (1), égale au maximum des priorités des files de messages des entrées (21,22) dudit premier agent (15) comprenant un premier message destiné à la sortie (18) dudit premier agent (15) connectée audit lien (16) ; et
- on transmet la priorité du lien à l'entrée dudit second agent (1) connectée au lien (16).

2. Procédé selon la revendication 1, **caractérisé en ce que** l'on transmet, en outre, sur une sortie (8,9) de l'agent de transmission (1), le message, destiné à ladite sortie (8,9), d'une file ayant la priorité de file la plus élevée.

3. Procédé selon la revendication 2, **caractérisé en ce que** l'on affecte, en outre, à la file des messages de l'entrée (2) dudit second agent (1) sur laquelle arrive ledit lien (16), une priorité résultante égale au maximum de la priorité du lien (16) et de la priorité de la file de messages de l'entrée sur laquelle est connecté le lien (16).

4. Procédé selon la revendication 3, **caractérisé en ce que** l'on affecte, en outre, une priorité de lien à un lien connecté à une sortie (8,9) du second agent de transmission (1), étant une priorité résultante, égale au maximum de priorités résultantes qui résultent des priorités des files de messages et des priorités des liens respectifs desdites files de messages des entrées dudit second agent (1) comprenant un premier message destiné à ladite sortie dudit second agent (1).

5. Procédé selon la revendication 3 ou 4, **caractérisé en ce que** l'on transmet, en outre, sur une sortie d'un agent de transmission (1,15), le message, destiné à ladite sortie, d'une file ayant la priorité résultante la plus élevée.

6. Procédé selon la revendication 5, **caractérisé en ce que** l'on gère dynamiquement la priorité affectée à un message crée par un agent en fonction du débit de réponse aux messages émis par ledit agent, pour optimiser l'utilisation du débit de communication disponible.

7. Système de gestion de priorité lors de la transmission d'un message dans un réseau d'interconnexions comprenant au moins un agent de transmission (1) qui comprend au moins une entrée (2,3,4) et au moins une sortie (8,9), chaque entrée (2,3,4) comprenant un moyen de mémorisation (5,6,7) organisé en une file de messages de type premier entré premier sorti, dans lequel ;
- les agents créateurs de messages comprennent des moyens pour affecter une priorité de message transmise avec le message ; et
- au moins une file de messages d'une entrée (2,3,4) comprend des moyens (12,13,14) pour affecter à la file de messages une priorité de file égale au maximum des priorités des messages de la file ;
**caractérisé en ce qu'**il comprend:
- des moyens (17) pour affecter une priorité de lien à un lien (16) reliant une sortie d'un premier agent de transmission (15) à une entrée d'un second agent de transmission (1), égale au maximum des priorités des files de messages des entrées (2,3,4) dudit premier agent (15) comprenant un premier message destiné à la sortie dudit premier agent (15) connectée audit lien (16) ; et
- des moyens de transmission (17) de la priorité du lien (16) à l'entrée (2) dudit second agent (1) connectée au lien (16).

8. Système selon la revendication 7, **caractérisé en ce qu'**une sortie (8,9) dudit agent de transmission (1) comprend des moyens pour transmettre le message, destiné à ladite sortie, d'une file ayant la priorité de file la plus élevée.

9. Système selon la revendication 8, **caractérisé en ce qu'**il comprend des moyens (10, 11) pour affecter une priorité de lien à un lien connecté à une sortie (8,9) du second agent (1), étant une priorité résultante, égale au maximum de priorités résultantes qui résultent des priorités de files de messages et des priorités des liens respectifs desdites files de messages des entrées (2,3,4) dudit second agent (1) comprenant un premier message destiné à ladite sortie dudit second agent (1).

10. Système selon la revendication 8 ou 9, **caractérisé en ce qu'**une sortie (8,9) dudit second agent (16) comprend des moyens (10,11) pour transmettre le message, destiné à ladite sortie (8,9), d'une file ayant la priorité résultante la plus élevée.

11. Système selon la revendication 10, **caractérisé en ce qu'**il comprend en outre des moyens (23,24,25) pour affecter à la file des messages de l'entrée (2) dudit second agent (1) sur laquelle arrive ledit lien (16), une priorité résultante égale au maximum de la priorité du lien (16) et de la priorité de la file de messages de l'entrée (2) sur laquelle est connecté le lien (16).

12. Système selon la revendication 11, **caractérisé en ce qu'**il comprend des moyens (10,11) pour transmettre une priorité de lien étant une priorité résultante.

13. Système selon la revendication 12, **caractérisé en ce que** lesdits moyens de transmission (10, 11) comprennent des liaisons point-à-point associées chacune à un lien de transmission de messages.

14. Système selon la revendication 12, **caractérisé en ce que** lesdits moyens de transmission (10, 11) sont aptes à transmettre une desdites priorités dans un message dédié.

## Claims

1. Method of managing priority during the transmission of a message, in an interconnections network comprising at least one transmission agent (1) which comprises at least one input (2, 3, 4) and at least one output (8, 9), each input (2, 3, 4) comprising a means (5, 6, 7) of storage of a queue of messages of the first in first out type, in which:
- a message priority is assigned during the creation of the message;
- a queue priority equal to the maximum of the priorities of the messages of the queue is assigned to at least one queue of messages of an input;
**characterized in that**:
- a link priority is assigned to a link (16) linking an output (18) of a first transmission agent (15) to an input (2) of a second transmission agent (1), equal to the maximum of the priorities of the queues of messages of the inputs (21, 22) of the said first agent (15) comprising a first message destined for that output (18) of the said first agent (15) which is connected to the said link (16) ; and
- the priority of the link is transmitted to that input of the said second agent (1) which is connected to the link (16).

2. Method according to Claim 1, **characterized in that** the message, destined for an output (8, 9), of a queue having the highest queue priority is furthermore transmitted on the said output (8, 9) of the transmission agent (1).

3. Method according to Claim 2, **characterized in that** a resultant priority equal to the maximum of the priority of the link (16) and of the priority of the queue of messages of the input to which the link (16) is connected is assigned, furthermore, to the queue of the messages of that input (2) of the said second agent
(1) at which the said link (16) arrives.

4. Method according to Claim 3, **characterized in that** a link priority is furthermore assigned to a link connected to an output (8, 9) of the second transmission agent (1), being a resultant priority, equal to the maximum of resultant priorities which result from the priorities of the queues of messages and the priorities of the respective links of the said queues of messages of the inputs of the said second agent (1) comprising a first message destined for the said output of the said second agent (1).

5. Method according to Claim 3 or 4, **characterized in that** the message, destined for an output, of a queue having the highest resultant priority is furthermore transmitted on the said output of a transmission agent (1, 15).

6. Method according to Claim 5, **characterized in that** the priority assigned to a message created by an agent is managed dynamically as a function of the throughput of response to the messages dispatched by the said agent, so as to optimize the use of the communication throughput available.

7. System for managing priority during the transmission of a message, in an interconnections network comprising at least one transmission agent (1) which comprises at least one input (2, 3, 4) and at least one output (8, 9), each input (2, 3, 4) comprising a means (5, 6, 7) of storage organized as a queue of messages of the first in first out type, in which:
- the message creation agents comprise means for assigning a message priority transmitted with the message; and
- at least one queue of messages of an input (2, 3, 4) comprises means (12, 13, 14) for assigning a queue priority equal to the maximum of the priorities of the messages of the queue to the queue of messages;
**characterized in that** it comprises:
- means (17) for assigning a link priority to a link (16) linking an output of a first transmission agent (15) to an input of a second transmission agent (1), equal to the maximum of the priorities of the queues of messages of the inputs (2, 3, 4) of the said first agent (15) comprising a first message destined for that output of the said first agent (15) which is connected to the said link (16); and
- means (17) for transmitting the priority of the link (16) to that input (2) of the said second agent (1) which is connected to the link (16).

8. System according to Claim 7, **characterized in that** an output (8, 9) of the said transmission agent (1) comprises means for transmitting the message, destined for the said output, of a queue having the highest queue priority.

9. System according to Claim 8, **characterized in that** it comprises means (10, 11) for assigning a link priority to a link connected to an output (8, 9) of the second agent (1), being a resultant priority, equal to the maximum of resultant priorities which result from the priorities of queues of messages and the priorities of the respective links of the said queues of messages of the inputs (2, 3, 4) of the said second agent (1) comprising a first message destined for the said output of the said second agent (1).

10. System according to Claim 8 or 9, **characterized in that** an output (8, 9) of the said second agent (16) comprises means (10, 11) for transmitting the message, destined for the said output (8, 9), of a queue having the highest resultant priority.

11. System according to Claim 10, **characterized in that** it furthermore comprises means (23, 24, 25) for assigning to the queue of the messages of that input (2) of the said second agent (1) at which the said link (16) arrives, a resultant priority equal to the maximum of the priority of the link (16) and of the priority of the queue of messages of the input (2) to which the link (16) is connected.

12. System according to Claim 11, **characterized in that** it comprises means (10, 11) for transmitting a link priority being a resultant priority.

13. System according to Claim 12, **characterized in that** the said means of transmission (10, 11) comprise point-to-point linkups each associated with a link for transmitting messages.

14. System according to Claim 12, **characterized in that** the said means of transmission (10, 11) are able to transmit one of the said priorities in a dedicated message.

## Patentansprüche

1. Verfahren zur Prioritätsverwaltung während der Übertragung einer Nachricht in einem Verbindungsnetz mit mindestens einem Übertragungsagenten (1), der mindestens einen Eingang (2,3,4) und mindestens einen Ausgang (8,9) aufweist, wobei jeder Eingang (2,3,4) eine Speichereinrichtung (5,6,7) zur Speicherung einer Nachrichtenschlange des Typs First-in-first-out aufweist, in welchem
- eine Nachrichtenpriorität bei der Erzeugung der Nachricht zugewiesen wird;
- mindestens einer Nachrichtenschlange eines Eingangs eine Schlangenpriorität zugewiesen wird, die gleich dem Maximum der Nachrichtenprioritäten der Schlange ist;
**dadurch gekennzeichnet, daß**
- einem Verbindungsabschnitt (16), der einen Ausgang (18) eines ersten Übertragungsagenten (15) mit einem Eingang (2) eines zweiten Übertragungsagenten (1) verbindet, eine Verbindungsabschnittpriorität zugewiesen wird, die gleich dem Maximum der Prioritäten der Nachrichtenschlangen der Eingänge (21,22) des ersten Agenten (15) ist, die eine erste Nachricht aufweisen, die für den an dem Verbindungsabschnitt (16) angeschlossenen Ausgang (18) des ersten Agenten (15) bestimmt ist; und
- die Priorität des Verbindungsabschnitts zu dem Eingang des mit dem Verbindungsabschnitt (16) verbundenen zweiten Agenten (1) übertragen wird.

2. Verfahren nach Anspruch 1, **dadurch gekennzeichnet, daß** ferner an einem Ausgang (8,9) des Übertragungsagenten (1) die für diesen Ausgang (8,9) bestimmte Nachricht einer Schlange übertragen wird, die die höchste Schlangenpriorität hat.

3. Verfahren nach Anspruch 2, **dadurch gekennzeichnet, daß** ferner der Nachrichtenschlange desjenigen Eingangs (2) des zweiten Agenten (1), zu welchem der Verbindungsabschnitt (16) hinführt, eine Gesamtpriorität zugewiesen wird, die gleich dem Maximum der Priorität des Verbindungsabschnitts (16) und der Priorität der Nachrichtenschlange des Eingangs ist, an welchem der Verbindungsabschnitt (16) angeschlossen ist.

4. Verfahren nach Anspruch 3, **dadurch gekennzeichnet, daß** ferner einem Verbindungsabschnitt, der an einem Ausgang (8,9) des zweiten Übertragungsagenten (1) angeschlossen ist, eine Verbindungsabschnittpriorität zugewiesen wird, die eine Gesamtpriorität ist, die gleich dem Maximum von Gesamtprioritäten ist, die aus den Prioritäten der Nachrichtenschlangen und den Prioritäten der jeweiligen Verbindungsabschnitte dieser Nachrichtenschlangen der Eingänge des zweiten Agenten (1) resultieren, die eine für diesen Ausgang des zweiten Agenten (1) bestimmte erste Nachricht aufweisen.

5. Verfahren nach Anspruch 3 oder 4, **dadurch gekennzeichnet, daß** ferner an einem Ausgang eines Übertragungsagenten (1,15) die für diesen Ausgang bestimmte Nachricht einer Schlange übertragen wird, die die höchste Gesamtpriorität hat.

6. Verfahren nach Anspruch 5, **dadurch gekennzeichnet, daß** die Priorität, die einer von einem Agenten erzeugten Nachricht zugewiesen ist, dynamisch in Abhängigkeit von der Antwortleistung auf die von diesem Agenten gesendeten Nachrichten verwaltet wird, um die Ausnutzung der verfügbaren Kommunikationsleistung zu optimieren.

7. System zur Prioritätsverwaltung während der Übertragung einer Nachricht in einem Verbindungsnetz, das mindestens einen Übertragungsagenten (1) aufweist, der mindestens einen Eingang (2,3,4) und mindestens einen Ausgang (8,9) aufweist, wobei jeder Eingang (2,3,4) eine Speichereinrichtung (5,6,7) aufweist, die als eine Nachrichtenschlange des Typs First-in-first-out organisiert ist, in welchem
- die Nachrichtenerzeugungsagenten Einrichtungen aufweisen, um eine Nachrichtenpriorität zuzuweisen, die mit der Nachricht übertragen wird; und
- mindestens eine Nachrichtenschlange eines Eingangs (2,3,4) Einrichtungen (12,13,14) aufweist, um der Nachrichtenschlange eine Schlangenpriorität zuzuweisen, die gleich dem Maximum der Nachrichtenprioritäten der Schlange ist;
**dadurch gekennzeichnet, daß** es aufweist:
- Einrichtungen (17), um einem Verbindungsabschnitt (16), der einen Ausgang eines ersten Übertragungsagenten (15) mit einem Eingang eines zweiten Übertragungsagenten (1) verbindet, eine Verbindungsabschnittpriorität zuzuweisen, die gleich dem Maximum der Prioritäten der Nachrichtenschlangen der Eingänge (2,3,4) des ersten Agenten (15) ist, die eine erste Nachricht aufweisen, die für den an diesem Verbindungsabschnitt (16) angeschlossenen Ausgang des ersten Agenten (15) bestimmt ist; und
- Übertragungseinrichtungen (17) zum Übertragen der Priorität des Verbindungsabschnitts (16) zu dem an dem Verbindungsabschnitt (16) angeschlossenen Eingang (2) des zweiten Agenten (1).

8. System nach Anspruch 7, **dadurch gekennzeichnet, daß** ein Ausgang (8,9) des Übertragungsagenten (1) Einrichtungen aufweist, um die für diesen Ausgang bestimmte Nachricht einer Schlange, die die höchste Schlangenpriorität hat, zu übertragen.

9. System nach Anspruch 8, **dadurch gekennzeichnet, daß** es Einrichtungen (10,11) aufweist, um einem Verbindungsabschnitt, der an einem Ausgang (8,9) des zweiten Agenten (1) angeschlossen ist, eine Verbindungsabschnittpriorität zuzuweisen, die eine Gesamtpriorität ist, die gleich dem Maximum der Gesamtprioritäten ist, die aus den Prioritäten der Nachrichtenschlangen und den jeweiligen Verbindungsabschnittprioritäten dieser Nachrichtenschlangen der Eingänge (2,3,4) des zweiten Agenten (1) resultieren, die eine für diesen Ausgang des zweiten Agenten (1) bestimmte erste Nachricht aufweisen.

10. System nach Anspruch 8 oder 9, **dadurch gekennzeichnet, daß** ein Ausgang (8,9) des zweiten Agenten (16) Einrichtungen (10,11) aufweist, um die für diesen Ausgang (8,9) bestimmte Nachricht einer Schlange zu übertragen, die die höchste Gesamtpriorität hat.

11. System nach Anspruch 10, **dadurch gekennzeichnet, daß** es ferner Einrichtungen (23,24,25) aufweist, um der Nachrichtenschlange desjenigen Eingangs (2) des zweiten Agenten (1), zu welchem der Verbindungsabschnitt (16) hinführt, eine Gesamtpriorität zuzuweisen, die gleich dem Maximum der Priorität des Verbindungsabschnitts (16) und der Priorität der Nachrichtenschlange des Eingangs (2) ist, an welchem der Verbindungsabschnitt (16) angeschlossen ist.

12. System nach Anspruch 11, **dadurch gekennzeichnet, daß** es Einrichtungen (10,11) aufweist, um eine Verbindungsabschnittpriorität, die eine Gesamtpriorität ist, zu übertragen.

13. System nach Anspruch 12, **dadurch gekennzeichnet, daß** die Übertragungseinrichtungen (10,11) Punkt-zu-Punkt-Verbindungen aufweisen, die jeweils einem Nachrichtenverbindungsabschnitt entsprechen.

14. System nach Anspruch 12, **dadurch gekennzeichnet, daß** die Übertragungseinrichtungen (10,11) in der Lage sind, eine der Prioritäten in einer dazugehörigen Nachricht zu übertragen.
